# EUROPEAN PATENT APPLICATION

(11) **EP 0 605 007 A2**
(43) Date of publication of application: **06.07.1994**
(21) Application number: 93121115.5
(22) Date of filing: 30.12.1993
(51) Int. Cl.: C08G 75/02

(54) **Process for preparing poly(arylene sulfide) polymers using high molecular weight poly(arylene sulfide) polymer as a reactant**

(30) Priority: 31.12.1992 US 999252
(71) Applicant: PHILLIPS PETROLEUM COMPANY, Bartlesville Oklahoma 74004 (US)
(72) Inventor: Geibel, Jon Frederick, Bartlesville, OK 74003 (US); Ash, Carlton Edwin, Sugarland, TX 77479 (US)
(74) Representative: Dost, Wolfgang, Dr.rer.nat., Dipl.-Chem.

(57) **Abstract**

A process is provided for producing a poly(arylene sulfide) polymer which employs a high molecular weight poly(arylene sulfide) polymer as a molecular weight modifying agent in the polymerization reaction mixture.

## Description

### FIELD OF THE INVENTION

This invention relates to poly(arylene sulfide), (PAS) polymers. In one aspect this invention relates to a process for the preparation of poly(arylene sulfide) polymers wherein a small amount of high molecular weight poly(arylene sulfide) polymer is used as a reactant in the polymerization.

### BACKGROUND OF THE INVENTION

Poly(arylene sulfide) polymers are generally known in the art and have been found useful due to their high chemical and thermal resistance. Processes for the preparation of such poly(arylene sulfide) polymers have been disclosed in the art. In a typical preparation, at least one dihaloaromatic compound, a sulfur source, and a polar organic compound are contacted under polymerization conditions. Often certain molecular weight enhancing agents are also added during the polymerization. For example, it is known to employ certain alkali metal carboxylates and alkali metal halides as reactants in order to increase the molecular weight of the final polymer. It is also known that the addition of water during the polymerization can serve to increase the molecular weight of the final polymer.

However, these systems present certain drawbacks. The use of carboxylates or halides necessitates a higher cost for reactants. The use of additional amounts of water requires larger volume for the system while not increasing the volume of yield of the polymer.

It would therefore be desirable to have a method for increasing the molecular weight of a poly(arylene sulfide) polymer without using expensive reactants or necessitating an increase in the volume of the production facilities.

### OBJECTS OF THE INVENTION

It is an object of this invention to provide a process for preparing a poly(arylene sulfide) polymer which employs a small amount of a high molecular weight poly(arylene sulfide) polymer as a molecular weight modifying agent in the polymerization.

### SUMMARY OF THE INVENTION

In accordance with this invention, poly(arylene sulfide) polymers are prepared by contacting a polymerization reaction mixture comprising at least one dihaloaromatic compound, a sulfur source, and a polar organic compound and a small amount of a high molecular weight poly(arylene sulfide) polymer under polymerization conditions.

### DETAILED DESCRIPTION OF THE INVENTION

The poly(arylene sulfide) polymer is prepared according to this invention by contacting a polymerization reaction mixture comprising at least one dihaloaromatic compound, a sulfur source, a polar organic compound and a small amount of a poly(arylene sulfide) polymer under polymerization conditions.

Dihaloaromatic compounds which can be employed in the process of this invention can be represented by the formula 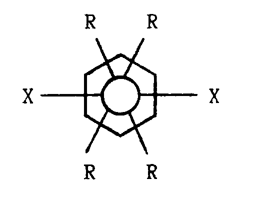
where each X is selected from the group consisting of chlorine, bromine, and iodine, and each R is selected from the group consisting of hydrogen and hydrocarbyl in which the hydrocarbyl can be an alkyl, cycloalkyl, or aryl radical or combination thereof such as alkaryl, aralkyl, or the like, the total number of carbon atoms in each molecule being within the range of 6 to about 24. While the halogen atoms can be in any position in the dihaloaromatic compound, it is preferred to employ p-dihalobenzenes as the dihaloaromatic compound.

Examples of suitable p-dihalobenzenes include p-dichlorobenzene (DCB), p-dibromobenzene, p-diiodobenzene, 1-chloro-4-bromobenzene, 1-chloro-4-iodobenzene, 1-bromo-4-iodobenzene, 2,5-dichlorotoluene. 2,5-dichloro-p-xylene, 1-ethyl-4-isopropyl-2,5-dibromobenzene, 1,2,4,5-tetramethyl-3,6-dichlorobenzene, 1-butyl-4-cyclohexyl-2,5-dibromobenzene, 1-hexyl-3-dodecyl-2,5-dichlorobenzene, 1-octadecyl-2,5-diidobenzene, 1-phenyl-2-chloro-5-bromobenzene, 1-(p-tolyl)-2,5-dibromobenzene, 1-benzyl-2,5-dichlorobenzene, 1-octyl-4-(3-methylcyclopentyl)-2,5-dichlorobenzene and the like, and mixtures of any two or more thereof. The preferred dihaloaromatic compound for use in this invention is p-dichlorobenzene (DCB) due to availability and effectiveness.

Any suitable sulfur source can be employed in the process of this invention. Suitable sulfur sources are disclosed in U.S. 3,919,177, which is hereby incorporated by reference. Such suitable sulfur sources include, but are not limited to thiosulfates, thioureas, thioamides, elemental sulfur, thiocarbamates, metal disulfides and oxysulfides, thiocarbonates, organic mercaptans, organic mercaptides, organic sulfides, alkali metal sulfides and bisulfides and hydrogen sulfide. It is presently preferred to use an alkali metal sulfide as the sulfur source.

Alkali metal sulfides which can be employed in the process of this invention include lithium sulfide, sodium sulfide, potassium sulfide, rubidium sulfide, cesium sulfide, and mixtures thereof. Preferably, the alkali metal sulfide is used as a hydrate or as an aqueous mixture. If desired, the alkali metal sulfide can be prepared as an aqueous solution by the reaction of an alkali metal hydroxide with an alkali metal bisulfide in aqueous solution. It is preferred to use sodium sulfide or a combination of sodium bisulfide and sodium hydroxide as the sulfur source in this invention.

The polar organic compounds useful in the present invention are solvents for the dihaloaromatic compounds and the sulfur source used in the production of poly(arylene sulfide) polymers. Examples of such polar organic compounds include amides, including lactams, and sulfones. Specific examples of such polar organic compounds include hexamethylphosphoramide, tetramethylurea, N,N'-ethylenedipyrrolidone, N-methyl-2-pyrrolidone (NMP), pyrrolidone, caprolactam, N-ethylcaprolactam, sulfolane, N,N'-dimethylacetamide, 1,3-dimethyl-2-imidazolidinone, low molecular weight polyamides, and the like. The polar organic compound presently preferred is NMP.

It is within the scope of this invention to employ other components in the polymerization reaction mixture or during the polymerization. For example, other molecular weight modifying or enhancing agents such as alkali metal carboxylates, lithium halides, or water can be added or produced during polymerization. Suitable alkali metal carboxylates which can optionally be employed include those having the formula R'CO₂M where R' is a hydrocarbyl radical selected from alkyl, cycloalkyl, aryl, alkylaryl, arylalkyl, and the number of carbon atoms in R' is in the range of 1 to about 20, and M is an alkali metal selected from lithium, sodium, potassium, rubidium and cesium. The alkali metal carboxylate can be employed as a hydrate or as a solution or dispersion in water. Use of the high molecular weight poly(arylene sulfide) polymer as a molecular weight modifying agent renders the use of other molecular weight modifying agents unnecessary, thus the economics of this invention are optimized when the other molecular weight modifying agents are omitted.

The poly(arylene sulfide) polymer which is employed as a reactant in the invention process comprises poly(arylene sulfide) polymer of relatively high molecular weight.

The poly(arylene sulfide) polymer used as a reactant can also contain other components such as, for example, cyclic and linear oligomers, polar organic compound, dihaloaromatic compounds and tri- or tetrahaloaromatic compounds, inorganic salts, poly(arylene sulfide) polymerization by-products, and various contaminants introduced during a poly(arylene sulfide) polymerization or recovery.

The poly(arylene sulfide) polymer prepared by the invention method is also a relatively high molecular weight polymer. The term high molecular weight poly(arylene sulfide) polymer, as used herein, is generally meant to denote an essentially linear poly(arylene sulfide) polymer having a melt flow value less than about 1000 g/10 min when in an uncured state. Essentially linear poly(arylene sulfide), as used herein, is defined as a polymer having no branching or such a small amount of branching as to have substantially no effect on the polymer properties. For example, the amount of polyhaloaromatic impurity found in the dihaloaromatic used in the poly(arylene sulfide) polymerization process would not he sufficient to cause the resultant poly(arylene sulfide) to be outside the essentially linear definition.

Generally, the ratio of reactants employed in the polymerization process can vary widely. It is preferred that the molar ratio of the amount of dihaloaromatic compound to amount of sulfur source be in the range of about 0.8/1 to about 2/1.

The amount of polar organic compound employed can vary during the polymerization over a wide range. Preferably, however, during polymerization the molar ratio of the amount of polar organic compound to the range of sulfur source is in the range of 1/1 to 10/1.

The amount of high molecular weight poly(arylene sulfide) polymer used as a reactant in the polymerization reaction mixture can vary widely. Generally, the upper limit on the amount of polymer employed as a reactant will be imposed by cost considerations. Preferably the amount of high molecular weight poly(arylene sulfide) polymer used as a reactant is in the range of about 0.05 to about 4 moles per mole of sulfur source, preferably 0.5 to about 2 moles per mole of sulfur source.

The components of the reaction mixture can be contacted with each other in any order. Generally, the poly(arylene sulfide) polymer employed as a reactant can be contacted with the components of the polymerization reaction mixture at any time prior to or during polymerization. If the poly(arylene sulfide) polymer used as a reactant is added with or contains a significant amount of water, it is preferred that the polymer and water be contacted with the sulfur source and polar organic compound under conditions sufficient to remove at least a portion of the water prior to addition of the dihaloaromatic compound and commencement of the polymerization; or in the alternative, it is preferred that the polymer and water be added at a later point during the polymerization so that the addition of the polymer and water does not adversely affect the polymerization. If the polymer is added with water or contains water, and is to be added after commencement of the polymerization, it is preferred that at least 40% conversion of the dihaloaromatic monomer has taken place prior to the addition.

The poly(arylene sulfide) polymer used as a molecular weight modifying agent is preferably contacted with the polymerization reaction mixture during a time sufficiently prior to termination of the polymerization in order to allow participation of the polymer in the polymerization reaction. It is therefore presently preferred to contact the polymer with the polymerization reaction mixture at least 30 minutes prior to termination of the polymerization.

The term commencement of the polymerization as used herein is defined as that point at which the polymerization reaction mixture is first subjected to polymerization conditions sufficient to initiate polymerization. The term termination of polymerization, as used herein, is defined as that point at which an affirmative step is taken to effect a removal of the conditions necessary for polymerization to effectively continue, for example, by beginning the recovery of the poly(arylene sulfide) polymer from the polymerization mixture. It must be noted that use of the term termination of the polymerization does not imply that complete reaction of the polymerization reaction components has occurred. It should also be noted that, as used herein, the term termination of the polymerization is not meant to imply that no further polymerization of the reactants can take place. Generally, for economic reasons, poly(arylene sulfide) polymer recovery is typically begun at a time when polymerization is substantially completed, that is, the increase in polymer molecular weight which would result from further polymerization is not significant enough to warrant the additional polymerization time.

Although the reaction temperature at which the polymerization is conducted can vary over a wide range, generally it will be within the range of about 170°C (347°F) to about 325°C (617°F), preferably about 200°C to about 290°C. The reaction time can vary widely, depending in part on the reaction temperature, but generally will be within the range of about 10 minutes to about 72 hours, preferably about 1 hour to about 8 hours. The pressure should be sufficient to maintain the polar organic compound and the dihaloaromatic compound substantially in the liquid phase.

The poly(arylene sulfide) polymer prepared according to this invention can be recovered by any method known to those of ordinary skill in the art. It is within the scope of this invention to obtain poly(arylene sulfide) polymer for use as a reactant in subsequent polymerizations during the recovery of desired poly(arylene sulfide) polymer prepared according to this invention. In this manner, a portion of the poly(arylene sulfide) polymer can continuously be reused in subsequent polymerizations, avoiding the necessity of employing and recovering or disposing of other molecular weight modifying agents.

## Claims

1. A process for preparing a first essentially linear high molecular weight poly(arylene sulfide) polymer which comprises:
contacting a polymerization mixture comprising at least one dihaloaromatic compound, a sulfur source, a molecular weight modifying agent comprising a second high molecular weight poly(arylene sulfide) polymer, and a first polar organic compound under suitable polymerization conditions to produce said first poly(arylene sulfide) polymer; and
recovering said first poly(arylene sulfide) polymer.

2. A process according to claim 1 wherein said molecular weight modifying agent is present in an amount in the range of about 0.05 to about 4 moles per mole of sulfur source.

3. A process according to claim 1 wherein the molar ratio of the amount of said dihaloaromatic compound to said sulfur source is in the range of about 0.8/1 to about 2/1.

4. A process according to claim 1 wherein the solar ratio of the amount of said first polar organic compound to said sulfur source is in the range of about 1/1 to about 10/1.

5. A process according to claim 1 wherein said second poly(arylene sulfide) polymer further comprises at least one component selected from the group consisting of cyclic oligomers of the formula 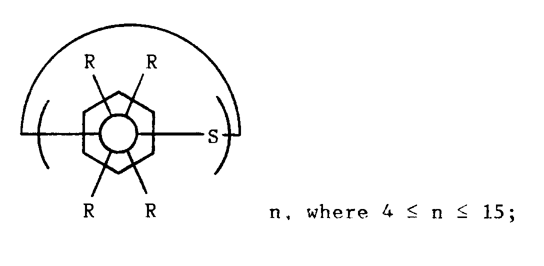 linear oligomers of the formula 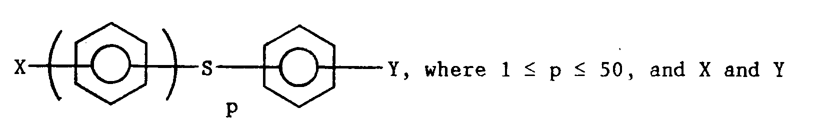 are independently selected from the group consisting of a hydrogen atom, a halogen atom, a phenoxy group, a hydroxy group and the salts thereof, a cyclic amide, substituted and unsubstituted amines of the formula 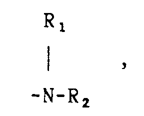 where R₁ and R₂ are selected from the group consisting of a hydrogen atom, an alkyl group having from 1 to 10 carbon atoms, a carboxylic acid having from 1 to 10 carbon atoms and a carboxylate having from 1 to 10 carbon atoms;
an alkali metal carboxylate; an alkali metal halide; water and a second polar organic compound.

6. A process according to claim 5 wherein the molar ratio of the total amount of said first and second polar organic compounds to the amount of said sulfur source is in the range of about 1/1 to about 10/1.

7. A process according to claim 5 wherein said second poly(arylene sulfide) polymer further comprises water.

8. A process according to claim 7 wherein said second poly(arylene sulfide) polymer is contacted with said sulfur source and said first polar organic compound under conditions sufficient to remove at least a portion of said water, prior to addition of said dihaloaromatic compound and commencement of said polymerization.

9. A process according to claim 7 wherein said second poly(arylene sulfide) polymer is contacted with said polymerization mixture after commencement of the polymerization at any point in time after about 40 mole percent conversion of the dihaloaromatic compound.

10. A process according to claim 1 wherein said second poly(arylene sulfide) polymer is contacted with the other components of said polymerization reaction mixture at any time after commencement of polymerization until the termination of said polymerization.

11. A process for preparing a first essentially linear, high molecular weight poly(phenylene sulfide) polymer which comprises:
contacting p-dichlorobenzene, sodium bisulfide, sodium hydroxide, N-methyl-2-pyrrolidone and a second high molecular weight poly(phenylene sulfide) polymer having a melt flow rate of less than about 1000 g/10 minutes when in an uncured state under sufficient polymerization conditions to form said first poly(phenylene sulfide) polymer; and
recovering said first poly(phenylene sulfide) polymer.
